# FASCICULE DE BREVET EUROPEEN

(11) **EP 3 043 936 B1**
(45) Date de publication et mention de la délivrance du brevet: **06.01.2021**
(21) Numéro de dépôt: 14761375.6
(22) Date de dépôt: 09.09.2014
(51) Int. Cl.: B22F 3/105, B29C 67/00

(54) **DISPOSITIF DE DÉPÔT DE LIT DE POUDRE SUR UNE SURFACE MUNI D'UNE SONDE À RÉPONSE ÉLECTROMAGNÉTIQUE, ET PROCÉDÉ CORRESPONDANT**
VORRICHTUNG ZUR ABSCHEIDUNG EINES PULVERBETTS AUF EINE OBERFLÄCHE, DIESE VORRICHTUNG MIT EINER ELEKTROMAGNETISCHEN ANTWORTSONDE UND ENTSPRECHENDES VERFAHREN
DEVICE FOR DEPOSITING A BED OF POWDER ON A SURFACE, SAID DEVICE BEING PROVIDED WITH AN ELECTROMAGNETIC-RESPONSE PROBE, AND CORRESPONDING METHOD

(30) Priorité: 09.09.2013 FR 1358611
(43) Date de publication de la demande: 20.07.2016
(73) Titulaire: Compagnie Générale des Etablissements Michelin, 63000 Clermont-Ferrand (FR)
(72) Inventeur: WIEL, Pierre, F-63040 Clermont-Ferrand Cedex 09 (FR); JHABVALA, Jamasp, CH-1007 Lausanne (CH); BOILLAT, Eric, CH-1023 Crissier (CH); SANTI, Gilles, CH-1007 Lausanne (CH); HIPPERT, David, CH-1212 Grand-Lancy (CH)
(74) Mandataire: Barascou, Frédéric
(86) Numéro de dépôt international: PCT/EP2014/069185
(87) Numéro de publication internationale: WO 2015/032974

(56) Documents cités:
- WO-A1-2007/147221
- WO-A1-2012/100766
- DE-A1-102011 111 818
- DE-U1-202010 010 771
- US-B1- 6 930 278
- YANG ET AL: "Metering and dispensing of powder; the quest for new solid freeforming techniques", POWDER TECHNOLOGY, ELSEVIER SEQUOIA, LAUSANNE, CH, vol. 178, no. 1, 16 août 2007 (2007-08-16) , pages 56-72, XP022202413, ISSN: 0032-5910, DOI: 10.1016/J.POWTEC.2007.04.004

## Description

L'invention concerne les lits de poudre, et en particulier la détermination de la densité et des défauts au sein d'un lit de poudre.

On utilise les lits de poudre dans des machines de frittage (« sintering » en langue anglaise) ou encore dans des machines de fusion sélective par laser (« SLM : Selective Laser Melting » en langue anglaise).

La densité et l'homogénéité du lit de poudre dans de telles machines est particulièrement importante pour la réussite de la fabrication d'une pièce. Cela étant, il est particulièrement compliqué de déterminer les propriétés d'un lit de poudre sans le détruire lors de la mesure.

On connaît de l'état de la technique antérieure des mesures par pesée d'un volume donné du lit de poudre, mais cette technique a pour inconvénient de détruire le lit de poudre.

Il a donc été proposé des procédés pour analyser les lits de poudre sans destruction. On pourra se référer aux documents EP 1 915 936 et WO 2012/100766 qui décrivent une mesure par courants de Foucault d'une couche solidifiée par fusion sélective par laser.

On pourra également se référer au document US 2006/0127267 qui décrit un procédé de détermination de la densité d'une poudre par courants de Foucault au moyen d'une bobine disposée autour d'un récipient contenant la poudre.

Les solutions décrites dans l'art antérieur ne permettent pas d'analyser sans les détruire des lits de poudre, ou de les analyser avant leur solidification.

On peut également se référer au document DE 10 2011 111818 - A1 (Mtu Aero Engines GMBH) qui décrit un procédé et un dispositif de fabrication générative d'un composant ou encore au document WO 2007/147221 - A1 (Univ Leuven Kath) qui décrit un procédé et un dispositif pour surveiller et contrôler le traitement sélectif en poudre laser.

L'invention a donc pour but de proposer un dispositif permettant l'obtention d'un lit de poudre ainsi que l'analyse de ce lit de poudre préalablement à sa solidification.

Selon un aspect, il est proposé un dispositif de dépôt de lit de poudre sur une surface, le dispositif comprenant un module de dépôt configuré pour balayer la surface en délivrant de la poudre sur la surface.

Selon une caractéristique générale de l'invention, le module de dépôt comporte au moins une sonde à réponse électromagnétique comprenant une bobine dont on mesure le changement d'impédance, ladite sonde étant apte à analyser une portion de lit de poudre ayant été délivrée.

Ainsi, contrairement aux solutions de l'art antérieur, c'est directement sur un module de dépôt, par exemple un bras qui balaye la surface, que l'on dispose une sonde. La sonde peut ainsi être utilisée dès le dépôt de la poudre.

L'utilisation d'une telle sonde à réponse électromagnétique est particulièrement avantageuse puisqu'elle permet d'analyser le lit de poudre sans le détruire.

La sonde peut être apte à analyser une bande du lit de poudre lors du balayage de la surface.

Ainsi, on obtient des informations sur toute la zone que peut balayer la sonde qui suit le mouvement du module de dépôt. La bande a alors une largeur correspondant à la largeur de la portion que peut analyser la sonde à réponse électromagnétique utilisée.

Le module de dépôt peut être configuré pour balayer la surface selon une direction depuis une position initiale en délivrant de la poudre, et pour balayer la surface en sens inverse pour retourner en position initiale, la sonde étant apte à analyser la même bande du lit de poudre à chaque balayage.

On obtient ainsi une meilleure analyse d'une bande du lit de poudre qui est analysé deux fois.

Le module peut comporter une pluralité de sondes aptes à analyser des portions différentes de lit de poudre ayant été délivrées.

On pourra par exemple placer plusieurs sondes alignées régulièrement pour couvrir et analyser, en un balayage, la totalité du lit de poudre.

Selon un autre aspect, il est proposé une machine de frittage ou de fusion sélective par laser, comprenant un dispositif de dépôt de lit de poudre tel que défini ci-avant et des moyens de solidification d'une partie du lit de poudre, et comportant un processeur apte à utiliser les informations fournies par ladite au moins une sonde pour commander les moyens de solidification.

Ainsi, on peut prendre en considération les informations fournies par la ou les sondes pour adapter la fusion du lit de poudre. On pourra notamment prendre en compte les variations de densité ou d'homogénéité pour adapter par exemple le temps de fusion. On obtient ainsi un meilleur frittage ou une meilleure fusion sélective par laser, ce qui peut notamment conduire à des objets de meilleure qualité.

Selon encore un autre aspect, il est proposé un procédé de dépôt de lit de poudre sur une surface, comprenant un balayage de la surface dans lequel on délivre de la poudre magnétique sur la surface.

Selon une caractéristique générale, le procédé comprend au moins une analyse d'une portion de lit de poudre ayant été délivrée par mesure du champ électromagnétique en mesurant le changement d'impédance d'une bobine d'une sonde à réponse électromagnétique.

La mesure du champ électromagnétique peut être mise en oeuvre au moyen d'une sonde à réponse électromagnétique comprenant une bobine dont on mesure le changement d'impédance.

On peut analyser une bande du lit de poudre lors du balayage de la surface.

On peut balayer la surface selon une direction depuis une position initiale en délivrant de la poudre, balayer la surface en sens inverse pour retourner en position initiale, et analyser la même bande du lit de poudre à chaque balayage.

On peut analyser simultanément des portions différentes de lit de poudre ayant été délivrées.

Le procédé peut comprendre en outre un frittage ou une fusion sélective par laser, dans lequel on solidifie une partie du lit de poudre, et dans lequel on commande la solidification en fonction d'informations fournies par ladite au moins une analyse.

D'autres buts, caractéristiques et avantages apparaîtront à la lecture de la description suivante donnée uniquement en tant qu'exemple non limitatif et faite en référence aux dessins annexés sur lesquels :
- les figures 1 et 2 illustrent schématiquement deux modes de dispositifs de dépôt selon des modes de réalisation de l'invention, et
- la figure 3 illustre schématiquement une machine de frittage ou de fusion sélective par laser selon un autre mode de réalisation de l'invention.

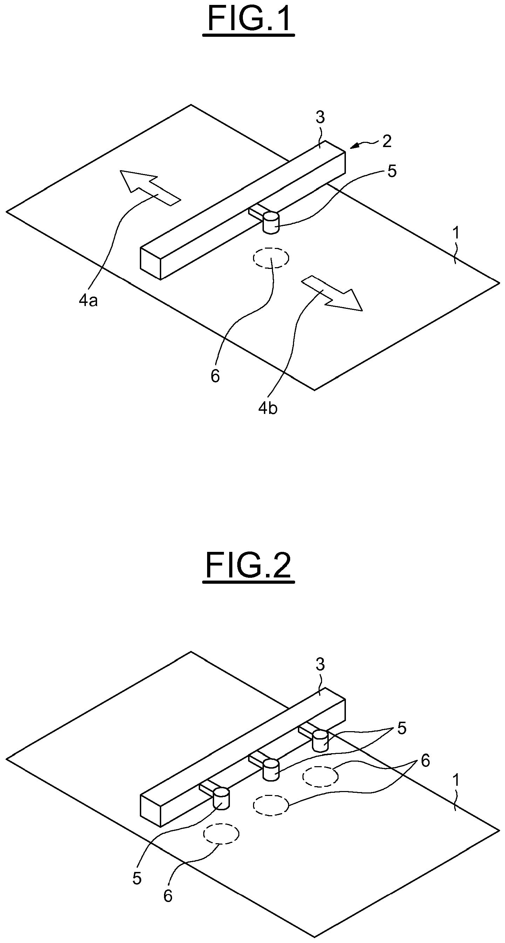

Sur la figure 1, on a représenté une surface 1 que l'on souhaite recouvrir d'un lit de poudre, par exemple en vu d'un frittage ou d'une fusion sélective par laser ultérieure. La formation du lit de poudre est obtenue en balayant la surface 1 au moyen d'un module de dépôt 2 qui balaye la surface 1 en délivrant de la poudre.

Le module de dépôt 2 comprend un bras 3 pouvant être entraîné en translation longitudinale dans les deux sens indiqués par les flèches 4a et 4b. Le bras 3 comprend des moyens pour délivrer de la poudre sur la surface. Le dépôt de poudre peut par exemple être effectué depuis une position initiale située à droite sur la figure, puis, en se déplaçant dans le sens de la flèche 4a, le bras peut recouvrir la surface 1 de poudre jusqu'à l'extrémité gauche de la surface 1. Le bras peut ensuite retourner dans sa position initiale en se déplaçant en sens inverse, dans le sens de la flèche 4b (sans délivrer de poudre).

Afin d'analyser les caractéristiques du lit de poudre, il est particulièrement avantageux de placer une sonde à réponse électromagnétique 5 directement au sein du module de dépôt 2 sur le bras 3. La sonde peut ainsi analyser une portion 6 du lit de poudre qui vient d'être délivré. A cet effet, on place la sonde du côté du module de dépôt correspondant au côté d'où provient le module de dépôt, ici à droite sur la figure.

En variante, la sonde peut analyser une bande du lit de poudre, en analysant des portions successives alors que le bras se déplace pour délivrer la poudre qui sera ultérieurement analysée.

On obtient ainsi un dispositif de dépôt de lit de poudre sur la surface 1 qui peut analyser au moyen de la sonde à réponse électromagnétique 5 le lit de poudre obtenu.

Il convient de noter qu'il est préférable d'utiliser des poudres magnétiques, par exemple comprenant du fer ou tout autre matériau adapté pour l'utilisation d'une sonde à réponse électromagnétique.

Sur la figure 2, on a représenté une variante de l'invention dans laquelle le bras 3 est muni de plusieurs sondes à réponse électromagnétique 5.

Chaque sonde 5 peut analyser une portion du lit de poudre 6. Comme on peut le constater sur la figure 2, on peut disposer les sondes de manière régulière pour couvrir plusieurs portions 6 adjacentes. En augmentant le nombre de sondes 5, on peut couvrir une bande transverse, et, lors du balayage effectué par le bras 3, la totalité du lit de poudre peut être analysée.

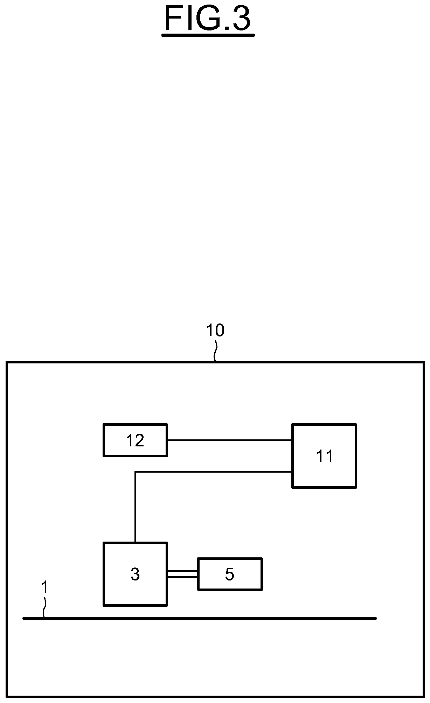

Sur la figure 3, on a représenté une machine 10, par exemple une machine de frittage ou de fusion sélective par laser. La machine 10 peut comprendre un dispositif de dépôt similaire à celui décrit en se référant aux figures 1 et 2. Plus précisément, la machine 10 peut comprendre une surface 1, un bras 3, et au moins une sonde à réponse électromagnétique 5.

Après avoir analysé une portion de lit de poudre, une bande du lit de poudre, ou encore la totalité du lit de poudre, les données obtenues par ces analyses, relatives par exemple à la densité ou a l'homogénéité du lit de poudre, sont traitées par un processeur 11.

Le processeur 11 peut par exemple être une unité de calcul, comprenant des moyens pour mémoriser les résultats des analyses, et pour traiter ces résultats.

La machine 10 peut comprendre des moyens de solidification 12 pour la solidification d'au moins une partie du lit de poudre déposé. A titre indicatif, les moyens de solidification peuvent comprendre un appareil à faisceau laser.

Les moyens de solidification 12 peuvent être commandés par le processeur 11. De ce fait, il est possible d'utiliser les résultats des analyses électromagnétiques pour adapter les paramètres d'une étape ultérieure de solidification. L'étape ultérieure de solidification est alors mise en œuvre en prenant en considération les défauts du lit de poudre.

On notera que la sonde à réponse électromagnétique 5 peut être une bobine dont on mesure le changement d'impédance.

Bien entendu, l'étape de mesure du champ électromagnétique du procédé selon l'invention peut être mise en œuvre au moyen d'une sonde à réponse électromagnétique, par exemple une bobine dont on mesure le changement d'impédance.

Grâce à l'invention, on obtient une analyse de lits de poudre qui est obtenue dès que le dépôt a été effectué.

Les informations obtenues par ces analyses peuvent permettre d'améliorer les étapes ultérieures de frittage ou de fusion sélective par laser, ce qui permet d'obtenir de meilleurs solides.

## Revendications

1. Dispositif de dépôt de lit de poudre sur une surface (1), le dispositif comprenant un module de dépôt (2) configuré pour balayer la surface en délivrant de la poudre magnétique sur la surface, **caractérisé en ce que** le module comporte au moins une sonde à réponse électromagnétique (5) comprenant une bobine dont on mesure le changement d'impédance, ladite sonde étant apte à analyser une portion (6) de lit de poudre ayant été délivrée, avant solidification du lit de poudre.

2. Dispositif selon la revendication 1, dans lequel la sonde (5) est apte à analyser une bande du lit de poudre lors du balayage de la surface.

3. Dispositif selon la revendication 2, dans lequel le module de dépôt (2) est configuré pour balayer la surface selon une direction (4a) depuis une position initiale en délivrant de la poudre, et pour balayer la surface en sens inverse (4b) pour retourner en position initiale, la sonde étant apte à analyser la même bande du lit de poudre à chaque balayage.

4. Dispositif selon l'une quelconque des revendications précédentes, dans lequel le module comporte une pluralité de sondes (5) aptes à analyser des portions (6) différentes de lit de poudre ayant été délivrées.

5. Machine de frittage ou de fusion sélective par laser (10), comprenant un dispositif selon l'une quelconque des revendications précédentes et des moyens de solidification (12) d'une partie du lit de poudre, et comportant un processeur (11) apte à utiliser les informations fournies par ladite au moins une sonde (5) pour commander les moyens de solidification.

6. Procédé de dépôt de lit de poudre sur une surface (1), le procédé comprenant un balayage de la surface dans lequel on délivre de la poudre magnétique sur la surface, **caractérisé en ce qu'**il comprend au moins une analyse d'une portion de lit de poudre ayant été délivrée par mesure du champ électromagnétique en mesurant le changement d'impédance d'une bobine d'une sonde à réponse électromagnétique, avant solidification du lit de poudre.

7. Procédé selon la revendication 6, dans lequel on analyse une bande du lit de poudre lors du balayage de la surface.

8. Procédé selon la revendication 7, dans lequel on balaye la surface selon une direction depuis une position initiale en délivrant de la poudre, on balaye la surface en sens inverse pour retourner en position initiale, et l'on analyse la même bande du lit de poudre à chaque balayage.

9. Procédé selon l'une quelconque des revendications 6 à 8, dans lequel on analyse simultanément des portions différentes de lit de poudre ayant été délivrées.

10. Procédé selon l'une quelconque des revendications 6 à 9, comprenant en outre un frittage ou une fusion sélective par laser, dans lequel on solidifie une partie du lit de poudre, et dans lequel on commande la solidification en fonctions d'informations fournies par ladite au moins une analyse.

## Patentansprüche

1. Vorrichtung zur Abscheidung eines Pulverbetts auf eine Oberfläche (1), wobei die Vorrichtung ein Abscheidungsmodul (2) beinhaltet, das dazu konfiguriert ist, die Oberfläche zu überstreichen und dabei Magnetpulver auf die Oberfläche aufzutragen, **dadurch gekennzeichnet, dass** das Modul mindestens eine elektromagnetische Antwortsonde (5) umfasst, die eine Spule beinhaltet, deren Impedanzänderung gemessen wird, wobei die Sonde fähig ist, einen aufgetragenen Pulverbettabschnitt (6) vor der Verfestigung des Pulverbetts zu analysieren.

2. Vorrichtung nach Anspruch 1, wobei die Sonde (5) fähig ist, während des Überstreichens der Oberfläche einen Streifen des Pulverbetts zu analysieren.

3. Vorrichtung nach Anspruch 2, wobei das Abscheidungsmodul (2) dazu konfiguriert ist, die Oberfläche ausgehend von einer Ausgangsposition in einer Richtung (4a) zu überstreichen und dabei Pulver aufzutragen und die Oberfläche in umgekehrter Richtung (4b) zu überstreichen, um zu der Ausgangsposition zurückzukehren, wobei die Sonde fähig ist, bei jedem Überstreichen denselben Streifen des Pulverbetts zu analysieren.

4. Vorrichtung nach einem der vorhergehenden Ansprüche, wobei das Modul eine Vielzahl von Sonden (5) umfasst, die fähig sind, unterschiedliche aufgetragene Pulverbettabschnitte (6) zu analysieren.

5. Maschine zum Sintern oder zum selektiven Laserschmelzen (10), die eine Vorrichtung nach einem der vorhergehenden Ansprüche und Mittel zur Verfestigung (12) eines Teils des Pulverbetts beinhaltet und die einen Prozessor umfasst (11), der fähig ist, die durch die mindestens eine Sonde (5) gelieferten Informationen zu verwenden, um die Verfestigungsmittel zu steuern.

6. Verfahren zur Abscheidung eines Pulverbetts auf eine Oberfläche (1), wobei das Verfahren ein Überstreichen der Oberfläche beinhaltet, bei dem Magnetpulver auf die Oberfläche aufgetragen wird, **dadurch gekennzeichnet, dass** es vor der Verfestigung des Pulverbetts mindestens eine Analyse eines aufgetragenen Pulverbettabschnitts durch Messen des elektromagnetischen Felds beinhaltet, indem die Impedanzänderung einer Spule einer elektromagnetischen Antwortsonde gemessen wird.

7. Verfahren nach Anspruch 6, wobei während des Überstreichens der Oberfläche ein Streifen des Pulverbetts analysiert wird.

8. Verfahren nach Anspruch 7, wobei die Oberfläche ausgehend von einer Ausgangsposition in einer Richtung überstrichen wird und dabei Pulver aufgetragen wird, die Oberfläche in umgekehrter Richtung überstrichen wird, um zu der Ausgangsposition zurückzukehren, und bei jedem Überstreichen derselbe Streifen des Pulverbetts analysiert wird.

9. Verfahren nach einem der vorhergehenden Ansprüche 6 bis 8, wobei unterschiedliche aufgetragene Pulverbettabschnitte simultan analysiert werden.

10. Verfahren nach einem der vorhergehenden Ansprüche 6 bis 9, das ferner ein Sintern oder ein selektives Laserschmelzen beinhaltet, wobei ein Teil des Pulverbetts verfestigt wird und wobei die Verfestigung in Abhängigkeit von Informationen, die durch die mindestens eine Analyse geliefert werden, gesteuert wird.

## Claims

1. Device for depositing a powder bed on a surface (1), the device comprising a deposition module (2) configured in order to scan the surface while delivering a magnetic powder onto the surface, **characterized in that** the module has at least one electromagnetic-response probe (5) comprising a coil, the change in impedance of which is measured, said probe being capable of analysing a delivered portion (6) of the powder bed, before solidification of the powder bed.

2. Device according to Claim 1, wherein the probe (5) is capable of analysing a strip of the powder bed during the scan of the surface.

3. Device according to Claim 2, wherein the deposition module (2) is configured in order to scan the surface in one direction (4a) from an initial position while delivering powder, and in order to scan the surface in the opposite direction (4b) in order to return to the initial position, the probe being capable of analysing the same strip of the powder bed during each scan.

4. Device according to any one of the preceding claims, wherein the module has a plurality of probes (5) capable of analysing different delivered powder bed portions (6).

5. Sintering or selective laser melting machine (10) comprising a device according to any one of the preceding claims and means (12) for solidifying a part of the powder bed, and having a processor (11) capable of using the information provided by the said at least one probe (5) in order to control the solidification means.

6. Method for depositing a powder bed on a surface (1), the method comprising a scan of the surface during which powder is delivered onto the surface, **characterized in that** it comprises at least one analysis of a delivered powder bed portion by measuring the electromagnetic field by measuring the change of impedance of a coil of an electromagnetic-response probe, before solidification of the powder bed.

7. Method according to Claim 6, wherein a strip of the powder bed is analysed during the scan of the surface.

8. Method according to Claim 7, wherein the surface is scanned in one direction from an initial position while delivering the powder, the surface is scanned in the opposite direction in order to return to the initial position, and the same strip of the powder bed is analysed during each scan.

9. Method according to any one of Claims 6 to 8, wherein different delivered powder bed portions are analysed simultaneously.

10. Method according to any one of Claims 6 to 9, furthermore comprising sintering or selective laser melting, wherein a part of the powder bed is solidified, and wherein the solidification is controlled on the basis of information provided by the said at least one analysis.
